# EUROPEAN PATENT APPLICATION

(11) **EP 3 078 780 A2**
(43) Date of publication of application: **12.10.2016**
(21) Application number: 16164454.7
(22) Date of filing: 08.04.2016
(51) Int. Cl.: E03B 1/04

(54) **A WATER STORAGE AND RECYCLING DEVICE**

(30) Priority: 09.04.2015 GB 201506038
(71) Applicant: Garden Hippo Limited, Dundee DD1 3JA (GB)
(72) Inventor: Holdsworth, Peter, Dundee, DD5 3QW (GB)
(74) Representative: Williams, Paul Edwin

(57) **Abstract**

A water storage device (10) for storing and recycling greywater and rainwater comprises a reservoir (12) for holding a mixture of greywater and rainwater, greywater and rainwater inlets (16, 18) for ingress of greywater and rainwater respectively into the device, greywater and rainwater diverter valves (20, 22) which are independently operable between open positions, in which greywater or rainwater respectively can pass from the respective inlets into the reservoir, and closed positions, in which greywater or rainwater respectively can pass from the inlets out of the device without entering the reservoir, an outlet (40) for egress of water from the device, and a pump for pumping water from the reservoir through the outlet.

## Description

The present invention relates to a water storage and recycling device for storing and recycling greywater and rainwater, in particular for recycling grey and rainwater for outdoor use.

Water usage is increasing both domestically and industrially, causing water shortages and leading to an overall increasing cost of water.

In particular, increased water consumption combined with periods of below-average rainfall or drought can result in outdoor water-use restrictions being put into effect by the relevant authorities in affected areas (e.g. local or state governments), to restrict the outdoor use of water supplies, and to preserve water for essential uses such as drinking, flushing toilets, and firefighting. For example, under such restrictions the irrigation of lawns, washing of cars, filling of swimming pools, and hosing down of paved areas may be restricted or banned altogether.

Devices are known which store and recycle rainwater for outdoor uses. These devices often comprise an inlet pipe for connection to a guttering downpipe, via which rainwater is diverted for storage in a reservoir.

Devices are also know for the treatment, storage and recycling of "greywater", a term used to mean the waste water from domestic sources such as sinks, baths, showers, hand basins, washing machines and the like. Greywater can be syphoned directly from the source, such as a sink or bath, for storage in a reservoir for direct use, often with treatment prior to use to remove debris. For example, greywater can be treated by filtering, such as by passing it under gravity through sand, through mechanical filters or membranes, and/or biologically with bacteria to decompose organic substances, such as food residues.

The present invention seeks to provide an improved device for the storage and recycling of both greywater and rainwater.

Thus, according to the present invention there is provided a water storage device for storing and recycling greywater and rainwater, the device comprising a reservoir for holding a mixture of greywater and rainwater, greywater and rainwater inlets for ingress of greywater and rainwater respectively into the device, an outlet for egress of water from the device, and a pump for pumping water from the reservoir through the outlet; the device further comprising greywater and rainwater diverter valves which are independently operable between open positions, in which greywater or rainwater respectively can pass from the respective inlets into the reservoir, and closed positions, in which greywater or rainwater respectively can pass from the inlets out of the device without entering the reservoir.

The device of the present invention can thus be connected to both a source of rainwater, for example a guttering downpipe, and a source of greywater, for example a drainage outflow from a household kitchen or bathroom, and permits a user to control whether either or both water sources are used to fill the reservoir. The device comprises a diverter valve for both greywater and rainwater, which can be either opened or closed according to which water source the user wishes to use to fill the reservoir. For example, if during drier months rainwater alone will not provide sufficient water for the required uses, such as watering a garden or washing a car, then the greywater diverter valve can be opened to divert greywater into the reservoir for storage. Alternatively, during wetter months when outdoor water usage may be lower, for example when garden watering and car washing are less likely to be performed, the greywater and/or the rainwater diverter valve can be closed, to divert greywater and/or rainwater respectively to waste, e.g. to the drain.

The water storage device of the present invention thus comprises a reservoir for holding a mixture of greywater and rainwater. The reservoir can have any appropriate capacity, and for domestic household purposes this may be from 100 to 500 litres, for example 200 to 300 litres. For commercial purposes, the capacity may be substantially larger. The reservoir may be made from any suitable material, for example a suitably robust plastics material. A suitable material for forming the reservoir is polyethylene, for example high density polyethylene. The reservoir material may further comprise an antibacterial additive or coating to help prevent the build up of biofilm. The shape and configuration of the reservoir may be designed to assist with the sedimentation and settlement of water collecting therein. For example, the sides of the reservoir may comprise baffles for the collection of sediment from the collected water.

The water storage device of the present invention also comprises greywater and rainwater inlets for ingress of greywater and rainwater respectively into the device. The inlets may be connected to sources of greywater and rainwater respectively by any suitable means, such as a pipe or hose. For example, the greywater inlet may be connected to the greywater drainpipe from a kitchen, to divert greywater into the device via the greywater inlet, and/or the rainwater inlet may be connected to a guttering downpipe from the roof of a property, to divert rainwater into the device via the rainwater inlet. Suitable connectors and pipe/hose diameters will be known to those skilled in the art.

The water storage device of the present invention further comprises greywater and rainwater diverter valves which are independently operable between open positions, in which greywater or rainwater respectively can pass from the respective inlets into the reservoir, and closed positions, in which greywater or rainwater respectively can pass from the inlets out of the device without entering the reservoir. The independently operable diverter valves allow the user complete control over the water which enters the reservoir. For example, a user may set the device to have a default setting in which the greywater diverter valve is closed and the rainwater diverter valve is open. With this setting, greywater from a greywater source, such as a kitchen, would not enter the reservoir and would pass to waste, for example to the drain, and the reservoir would be filled from rainwater alone, entering the reservoir via the rainwater inlet. However, if for example during periods when outdoor water usage is low, rainfall is high, and the reservoir may already be full, the user may choose to have the rainwater diverter valve also in the closed position, so that neither greywater nor rainwater enters the reservoir, and both pass to waste. Alternatively, during drier periods of lower rainfall when outdoor water usage is higher, the user may choose to have both the greywater and rainwater diverter valves in the open positions, so that both greywater and rainwater are stored within the reservoir.

The water storage device of the present invention preferably also comprises a greywater and/or rainwater filter for filtering the greywater and/or rainwater respectively entering the device to remove particulate matter prior to storage in the reservoir. Such filters are known in the art, and may have a mesh size of, for example, from 250 to 1000 µm, more preferably from 500 to 800 µm. The greywater and rainwater filters may have different mesh sizes. For example, the greywater filter may have a mesh size of approximately 600 µm whereas the rainwater filter may have a mesh size of approximately 800 µm.

The water storage device of the present invention preferably further comprises greywater and/or rainwater dosing means, for dosing the incoming greywater and/or rainwater respectively with a dosing medium prior to storage in the reservoir. The dosing medium may be, for example, a disinfectant, an anti-microbial, or any other dosing medium which may be advantageously added to the incoming greywater and/or rainwater prior to storage in the reservoir. For example, if the water stored in the reservoir is intended to be used to water plants then the dosing medium should not be harmful to plants. The dosing medium may be added to the incoming water by any suitable means, for example, a dosing pump or injector, or by passing the incoming water through a dosing block. In those preferred embodiments of the present invention in which the incoming greywater and/or rainwater is filtered, dosing may occur either before or after filtering.

The water storage device of the present invention also comprises an outlet for the egress of water from the device. The outlet may for example comprise or be connectable to a length of hose, for example from 10 to 50 m in length (e.g. 20 to 30 m) for use in watering a garden. The outlet may comprise or be connectable to any suitable water irrigation or distribution device, such as the various types of device known for watering gardens, and power-washers for cleaning path and driveways, vehicles, and so forth.

The water storage device of the present invention also comprises a pump for pumping water stored within the reservoir through the outlet. For economy of size of the device, the pump may be positioned within the reservoir, i.e. in use the pump may at times be submerged within the water held in the reservoir. The pump is however preferably raised for example on a platform or stand from the bottom of the reservoir, in order to avoid sediment being drawn by the pump.

The water storage device of the present invention preferably further comprises an overflow, for allowing unwanted or excess water to flow from the device to waste. Thus, when the greywater and/or rainwater diverter valves are closed, the unwanted water may pass through the valves to the overflow, and hence to waste, rather than into the reservoir. Additionally or alternatively, the overflow may act to allow for the egress of excess water in the reservoir. Thus, if too much water flows into the reservoir and it overflows, the excess is collected by the overflow, and passes to waste. The overflow may comprise a funnel-shaped section, to help prevent the backflow of unwanted or excess water back into the device.

Embodiments of the present invention will now be described in detail with reference to the accompanying drawings in which:
Figure 1 shows an exploded perspective view of an embodiment of a water storage and recycling device according to the present invention;
Figure 2 shows an unexploded rear view of the embodiment shown in Figure 1; and
Figures 3a and 3b show a cutaway detail and cutaway side view respectively of an embodiment of a device of the present invention.

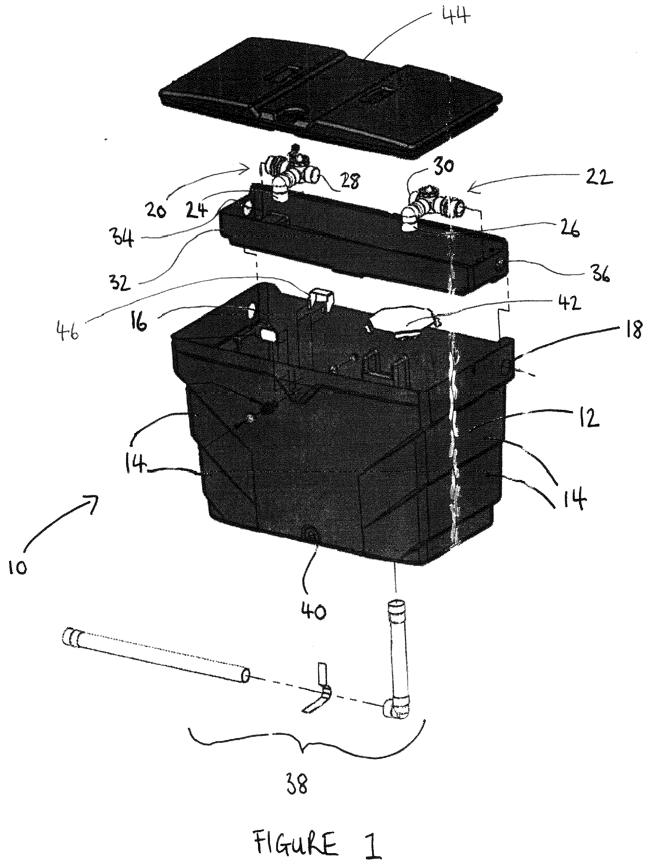

Referring to Figure 1, a water storage and recycling device 10 is shown which comprises a reservoir 12 for holding a mixture of greywater and rainwater. The reservoir 12 can have any appropriate capacity, and for domestic household purposes this may be from 100 to 500 litres, for example 200 to 300 litres. In this embodiment, a preferred material for forming the reservoir 12 is high density polyethylene. The high density polyethylene contains an antibacterial additive to help to prevent the build up of biofilm within the reservoir 12. The sides of the reservoir 12 comprise baffles 14 to assist with the sedimentation and settlement of water collecting therein.

The device 10 shown in Figure 1 further comprises greywater 16 and rainwater 18 inlets for ingress of greywater and rainwater respectively into the device 10. The inlets 16 and 18 will in use be connected to sources of greywater and rainwater respectively by suitable means, such as a pipe or hose (not shown in Figure 1). For example, the greywater inlet 16 may be connected to the greywater drainpipe from a kitchen, to divert greywater into the device 10 via the greywater inlet 16, and the rainwater inlet 18 may be connected to a guttering downpipe from the roof of a property, to divert rainwater into the device 10 via the rainwater inlet 18. Suitable connectors and pipe/hose diameters will be known to those skilled in the art.

In the embodiment shown in Figure 1, the greywater 16 and rainwater 18 inlets open directly into greywater 20 and rainwater 22 diverter valves respectively. The diverter valves 20 and 22 sit on an overflow tray 32, which has inlets 34 and 36 corresponding to inlets 18 and 20 of the reservoir 12. The diverter valves 20 and 22 are independently operable between open positions, in which greywater or rainwater respectively can pass through the respective reservoir inlets 16 and 18 and overflow tray inlets 34 and 36 into the reservoir 12, and closed positions, in which greywater or rainwater respectively instead flows out of the device via the overflow tray 32 without entering the reservoir 12.

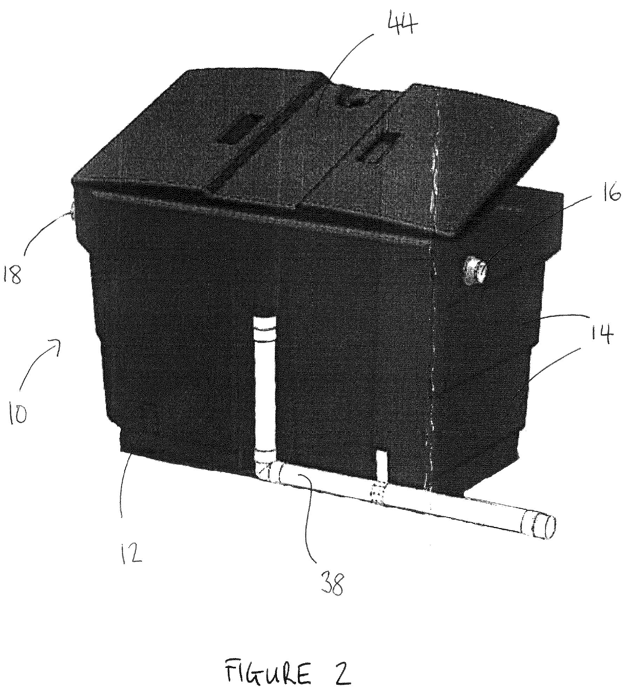

Thus, when the diverter valves 20 and 22 are in the open position, water will enter the valves 20 and 22 through reservoir inlets 16 and 18 and overflow tray inlets 34 and 36 respectively, and exit through the reservoir filler ports 24 and 26 into the reservoir 12. In this embodiment, the reservoir filler ports 24 and 26 extend over the overflow tray 32 and point directly downwards into the reservoir 12. When the diverter valves 20 and 22 are in the closed position, water will enter the valves 20 and 22 through inlets 16 and 18, and exit through waste ports 28 and 30 into the overflow tray 32. The overflow tray 32 is connected to a waste water outlet 38 at the rear of the device 10 (see Figure 2).

The overflow tray 32 also operates such that when the reservoir 12 is full of water, excess water entering the reservoir 12 pools in the tray 32 and exits via the waste water outlet 38.

The device 10 of the present invention further comprises an outlet 40 for the egress of recycled water from the device 10. The outlet 40 is connectable to a length of hose (not shown), for example from 10 to 50 m in length (e.g. 20 to 30 m) for use in watering a garden. The outlet 40 is also preferably connectable to other water irrigation or distribution devices, such as power-washers.

The device 10 of the present invention also comprises a pump (not shown) for pumping water stored within the reservoir 12 through the outlet 40. The pump is positioned within the reservoir 12, i.e. in use the pump may be submerged within the water held in the reservoir 12. The pump is raised on a stand 42 which sits on the bottom of the reservoir 12, in order to avoid sediment being drawn by the pump.

The device 10 of the present invention further comprises a lid 44, which is lockable to the main body of the reservoir 12 by a lock 46. In Figure 1 the lid 44 is shown removed from the reservoir 12, but may be connected to the reservoir 12 by hinges.

Figure 2 shows an unexploded rear view of the embodiment of Figure 1, showing the waste water outlet 38. Thus, the device 10 comprises a reservoir 12 having baffles 14, greywater 16 and rainwater inlets 18, and a waste water outlet 38. The waste water outlet 38 extends from inside the reservoir 12 from the overflow plate (not shown in Figure 2).

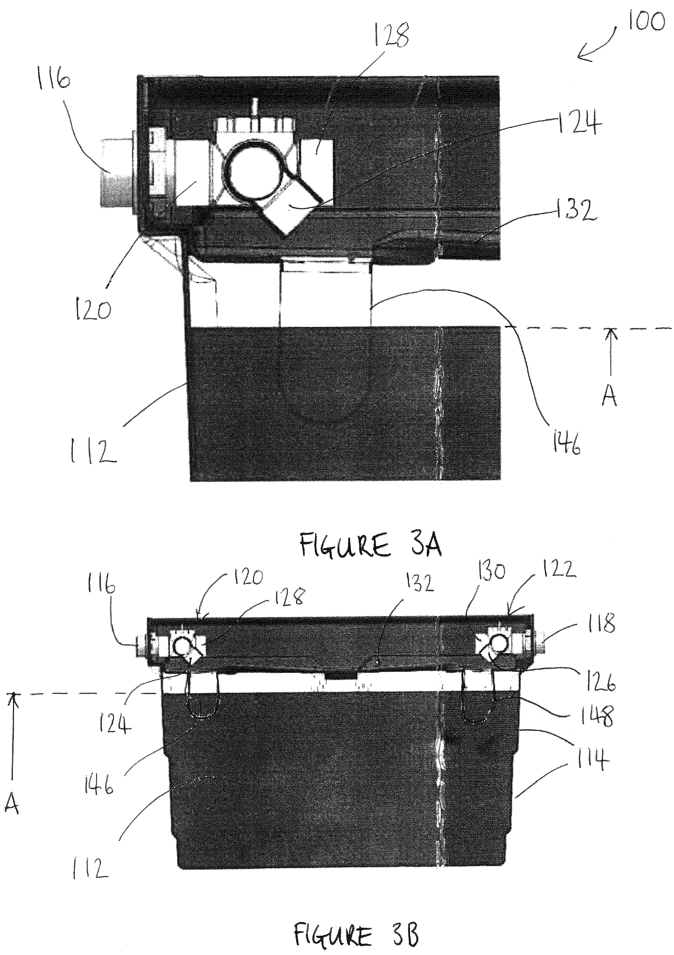

The device of the present invention may also comprise one or more filters for filtering greywater and/or rainwater prior to filling the reservoir. In this connection, a filter arrangement is shown in Figures 3a and 3b.

Figures 3a and 3b show a cutaway detail and cutaway side view respectively of an embodiment of a device 100 of the present invention. Thus, the device 100 comprises a reservoir 112 having baffles 114, a greywater inlet 116, a rainwater inlet 118, and an overflow tray 132, all of which are substantially the same as those described with reference to Figures 1 and 2. The embodiment of the device 100 shown in Figures 3a and 3b also comprises greywater 120 and rainwater 122 diverter valves. These valves 120 and 122 differ from those shown in Figure 1 in that the reservoir filler ports 124 and 130 are angled at approximately 45° to vertical. Waste ports 128 and 130 exit into overflow tray 132 as with the embodiment shown in Figures 1 and 2.

The embodiment shown in Figures 3a and 3b also comprises greywater 146 and rainwater 148 filters, for filtering out particulates from the incoming water prior to storage in the reservoir 112. The filters 146 and 148 may have a mesh size of, for example, from 250 to 1000 µm, more preferably from 500 to 800 µm, and may have different mesh sizes. For example, the greywater filter 146 may have a mesh size of approximately 600 µm whereas the rainwater filter 148 may have a mesh size of approximately 800 µm.

Figures 3a and 3b also show the maximum water level of the reservoir 112, indicated by arrows A. Excess water beyond this level pools in the overflow tray 132, and exits the device 100 through the waste water outlet (not shown in Figures 3a and 3b).

As described above, the device of the present invention may also comprise greywater and/or rainwater dosing means, for dosing the incoming greywater and/or rainwater respectively with a dosing medium prior to storage in the reservoir. The dosing medium may be, for example, a disinfectant, an anti-microbial, or any other dosing medium which may advantageously be added to the incoming greywater and/or rainwater prior to storage in the reservoir. For example, if the water stored in the reservoir is intended to be used to water plants then the dosing medium should not be harmful to plants. The dosing medium may be added to the incoming water by any suitable means, for example, a dosing pump or injector, or by passing the incoming water through a dosing block. In those preferred embodiments of the present invention in which the incoming greywater and/or rainwater is filtered, dosing may occur either before or after filtering. The embodiments of the present invention described with reference to the Figures may thus also comprise dosing means, although these are not shown in the Figures.

## Claims

1. A water storage device for storing and recycling greywater and rainwater, the device comprising a reservoir for holding a mixture of greywater and rainwater, greywater and rainwater inlets for ingress of greywater and rainwater respectively into the device, greywater and rainwater diverter valves which are independently operable between open positions, in which greywater or rainwater respectively can pass from the respective inlets into the reservoir, and closed positions, in which greywater or rainwater respectively can pass from the inlets out of the device without entering the reservoir, an outlet for egress of water from the device, and a pump for pumping water from the reservoir through the outlet.

2. A water storage device according to claim 1 wherein the reservoir has a capacity of from 100 to 500 litres, for example 200 to 300 litres.

3. A water storage device according to claim 1 or 2 where the reservoir is made from polyethylene.

4. A water storage device according to any preceding claim wherein the reservoir comprises an antibacterial additive or coating to combat the build up of biofilm.

5. A water storage device according to any preceding claim wherein the shape and configuration of the reservoir is designed to assist with the sedimentation and settlement of water collecting therein.

6. A water storage device according to claim 5 wherein the sides of the reservoir comprise baffles for the collection of sediment from the collected water.

7. A water storage device according to any preceding claim wherein the greywater inlet is connectable to the greywater drainpipe from a kitchen, and/or the rainwater inlet is connectable to a guttering downpipe from the roof of a property.

8. A water storage device according to any preceding claim which further comprises a greywater and/or rainwater filter for filtering the greywater and/or rainwater respectively entering the device to remove particulate matter prior to storage in the reservoir.

9. A water storage device according to claim 8 wherein each filter has a mesh size of from 250 to 1000 µm, more preferably from 500 to 800 µm.

10. A water storage device according to claim 8 or 9 comprising a greywater filter and a rainwater filter of different mesh sizes.

11. A water storage device according to claim 10 wherein the greywater filter has a mesh size of approximately 600 µm and the rainwater filter has a mesh size of approximately 800 µm.

12. A water storage device according to any preceding claim which further comprises greywater and/or rainwater dosing means, for dosing the incoming greywater and/or rainwater respectively with a dosing medium prior to storage in the reservoir, wherein the dosing medium preferably comprises a disinfectant or an anti-microbial.

13. A water storage device according to any preceding claim wherein the outlet comprises or is connectable to a length of hose, or comprises or is connectable to a water irrigation or distribution device.

14. A water storage device according to any preceding claim wherein the pump is positioned within the reservoir, wherein the pump is preferably raised from the bottom of the reservoir.

15. A water storage device according to any preceding claim which further comprises an overflow, for allowing unwanted or excess water to flow from the device to waste, wherein the overflow preferably comprises a funnel-shaped section, to help prevent the backflow of unwanted or excess water back into the device.
